# EUROPEAN PATENT SPECIFICATION

(11) **EP 4 395 337 B1**
(45) Date of publication and mention of the grant of the patent: **18.11.2026**
(21) Application number: 22874737.4
(22) Date of filing: 21.09.2022
(51) Int. Cl.: H04N 21/44, H04N 21/442

(54) **VIDEO PLAYING GRADE DETERMINATION METHOD, VIDEO PLAYING METHOD, AND RELATED APPARATUSES**
VERFAHREN ZUR BESTIMMUNG DES VIDEOABSPIELGRADS, VIDEOABSPIELVERFAHREN UND ZUGEHÖRIGE VORRICHTUNGEN
PROCÉDÉ DE DÉTERMINATION D'UNE QUALITÉ DE LECTURE D'UNE VIDÉO, PROCÉDÉ DE LECTURE D'UNE VIDÉO ET APPAREILS ASSOCIÉS

(30) Priority: 29.09.2021 CN 202111151091
(43) Date of publication of application: 03.07.2024
(73) Proprietor: BIGO TECHNOLOGY PTE. LTD., Singapore 117440 (SG)
(72) Inventor: XU, Yazhu, Guangzhou, Guangdong 511402 (CN); XIE, Lan, Guangzhou, Guangdong 511402 (CN)
(74) Representative: Yang, Shu
(86) International application number: PCT/CN2022/120221
(87) International publication number: WO 2023/051350

(56) References cited:
- WO-A1-2015/062521
- WO-A1-2019/245181
- CN-A- 105 263 037
- CN-A- 110 430 453
- CN-A- 112 019 384
- CN-A- 112 822 521
- CN-A- 113 055 698
- CN-A- 113 891 155
- GB-A- 2 539 335
- US-A1- 2016 286 267

## Description

### TECHNICAL FIELD

The present disclosure relates to the field of video playing back technologies, in particular to a method for determining a video playback level, a method for playing back videos, and apparatuses thereof.

### BACKGROUND

With the development of the streaming media technologies and the popularization of smart terminal devices, multi-person video application scenarios are more and more popular. With the development of the video and network technologies, several video applications are used in our daily life. Persons post and view videos via the video applications, and video playback means that a server pushes a video stream to the video applications via the server to play back the videos in the video applications. The definition of the video and the fluency of the video playback are ensured in pushing the video streams to ensure the quality in viewing the videos.

GB2539335A discloses a data flow control method and a system. The method comprises determining the available bandwidth between the sending and receiving nodes; determining a data buffer level at the receiving node from the amount of data present in the data buffer of the receiving mode; and if the data buffer level satisfied a criterion: requesting the next data segment in the sequence at a sequentially higher data rate than the current data rate if the available bandwidth exceeds a first bandwidth threshold; and requesting the next data segment in the sequence at the current data rate if the available bandwidth exceeds a second bandwidth threshold.

US2016/286267A1 discloses a bite rate switching method and a device for smart television. The method comprises: obtaining a current bit rate according to an average network bandwidth in the process of playing a first data source of multimedia data; and when the current bit rate is greater than a first bit rate, determining a difference value between the current bit rate and the first bit rate; when the current bit rate is less than the first bit rate, determining a difference value between the first bit rate and the current bit rate; and according to a comparison result of a trigger threshold and a difference value between the current bit rate and the first bit rate or a difference value between the first bit rate and the current bit rate, retrieving a second data source of the multimedia data from the server for playing or continuing retrieving the first data source for playing.

CN112822521A discloses a code rate control method and a device for audio and video transmission, equipment, and a storage medium. The method comprises the following steps: receiving playing condition information fed back by a client, wherein the playing condition information comprises to-be-played duration corresponding to audio and video data which are received and not played by the client and a timestamp of a last playing frame, estimating the receiving code rate of the client according to the playing condition information, determining sending condition information of the audio and video data, and determining a code rate control mode of the audio and video data transmission according to the playing condition information and the receiving code rate and the sending condition information of the client.

### SUMMARY

The invention is defined by the appended claims.

### BRIEF DESCRIPTION OF DRAWINGS

FIG. 1 is a flowchart of a method for determining a video playback level according to some embodiments of the present disclosure;
FIG. 2 is a flowchart of a method for determining a video playback level according to some embodiments of the present disclosure;
FIG. 3 is a flowchart of a method for playing back videos according to some embodiments of the present disclosure;
FIG. 4 is a structural diagram of an apparatus for determining a video playback level according to some embodiments of the present disclosure;
FIG. 5 is a structural diagram of an apparatus for playing back videos according to some embodiments of the present disclosure; and
FIG. 6 is a schematic structural diagram of an electronic device according to some embodiments of the present disclosure.

### DETAILED DESCRIPTION

It should be understood that the embodiments described herein are only intended to explain the present disclosure, rather than to limit the present disclosure. It should be further understood that the accompanying drawings only show some parts but all structures related to the present disclosure. The embodiments in the present disclosure and the features in the embodiments can be combined without conflict.

In the case that an audience views live-streaming videos, a proper definition level is selected in time based on a current bandwidth in a first manner. That is, a higher definition level is selected in the case that the network is good, and the definition is switched to a lower definition level to ensure the fluency of the video playback in the case that the network is not good. A second manner is performed based on a size of user cached data. In the case that the size of the cached data is greater than a predetermined threshold, the definition level is raised, and vice versa, the definition level is lowered. However, in the above first manner, the video playback lag is caused by the frequent switch of the definition level due to the change of the network state and the switch to the over-high level due to the inaccurate bandwidth prediction. In the second manner, the fixed cache threshold is prone to causing the problem of the frequent switch of the definition level and conservative level-switching decision, such that the definition level cannot be switched in time, and the user viewing experience is affected.

In summary, the definition and fluency cannot be balanced in playing back videos in the method for switching the definition level in some practices.

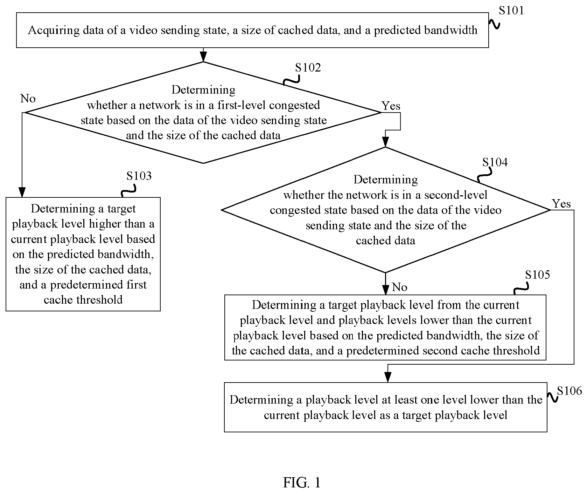

FIG. 1 is a flowchart of a method for determining a video playback level according to some embodiments of the present disclosure. The embodiments of the present disclosure are capable to the case of determining the video playback level. The method is performed by the apparatus for determining the video playback level according to some embodiments of the present disclosure, and the apparatus for determining the video playback level is achieved by hardware or software and is integrated in the electronic device according to some embodiments of the present disclosure. Illustratively, as shown in FIG. 1, the method for determining the video playback level according to some embodiments of the present disclosure includes the following processes.

In S101, data of a video sending state, a size of cached data, and a predicted bandwidth are acquired.

In the embodiments of the present disclosure, a server receives video data from a video sending end and then pushes the video data to a video data receiving end. In some embodiments, the video data is live streaming video data. The server receives video data from an anchor terminal and pushes the received video data to an audience terminal, such that the video data is played back on the audience terminal. The data of the video sending state is a size of unsent video data received from the anchor terminal, a size of video data sent but not received by the audience terminal, and the like. The size of the cached data is a size of video data stored in a file on the audience terminal. The predicted bandwidth is a network bandwidth that is between the server and the audience terminal and is predicted by several bandwidth predicting methods.

The playback level represents a level of the video playback definition. For example, the playback level includes the low definition, the standard definition, the high-definition, the super definition, and the like. In the embodiments of the present disclosure, number are used to represent the playback levels. The greater the number, the higher the playback level, and the greater the video playback definition.

In the embodiments, the data of the video sending state, the size of the cached data, and the predicted bandwidth are directly or indirectly collected by setting data collecting apparatus on the network.

In S102, whether a network is in a first-level congested state is determined based on the data of the video sending state and the size of the cached data.

In the embodiments of the present disclosure, a first-level congested state and a second-level congested state of the network are set. The congestion degree of the second-level congested state is greater than the congestion degree of the first-level congested state, and the first-level congested state is the first condition used to determine whether to raise the playback level in playing back the videos. For example, the data of the video sending state includes a size of unsent data and a size of unreceived data, and is used to: calculate a first sum of the size of the unsent data and the size of the unreceived data; determine whether the size of the cached data is greater than or equal to a product of the first sum and a predetermined first accumulation coefficient and whether the first sum is less than or equal to a predetermined first accumulation threshold; determine the network is in a non-congested state in response to determining that the size of the cached data is less than the product of the first sum and the predetermined first accumulation coefficient and the first sum is greater than the predetermined first accumulation threshold, and perform S103 to determine whether to raise the playback level; and determine the network is in the first-level congested state in response to determining that the size of the cached data is greater than or equal to the product of the first sum and the predetermined first accumulation coefficient and the first sum is less than or equal to the predetermined first accumulation threshold, and perform S104 to determine whether the network is in the second-level congested state.

In S103, a target playback level higher than a current playback level is determined based on the predicted bandwidth, the size of the cached data, and a predetermined first cache threshold.

In the embodiments of the present disclosure, one or more conditions for raising the playback level are predetermined. For example, a level-raising coefficient between the first cache threshold and the playback level is set in the embodiments of the present disclosure. In the case that the size of the cached data is greater than the first cache threshold and the predicted bandwidth is greater than a product of a playback bitrate of the playback level higher than the current playback level and the level-raising coefficient, the playback level is raised to a higher playback level. In the case that there are several raisable and greater playback levels, a playback level with a highest level is determined as the target playback level, such that the bandwidth is fully used to improve the video playback definition.

It should be noted that in the case that the level-raising condition is met and no proper playback level exists, or the network is in the non-first-level congested state, that is, the network state is greater than the first-level congested state and the level-raising condition is not met, S104 to S106 are performed to determine whether to maintain the playback level with the playback bitrate greater than the predicted bandwidth or lower the playback level.

In S104, whether the network is in a second-level congested state is determined based on the data of the video sending state and the size of the cached data.

With reference to the determination of the first-level congested state, the first sum of the size of the unsent data and the size of the unreceived data is calculated, whether a product of the size of the cached data and a predetermined second accumulation coefficient is less than or equal to the first sum and whether a predetermined second accumulation threshold is less than or equal to the first sum are determined, the network is in a second-level congested state in response to determining that the product of the size of the cached data and the predetermined second accumulation coefficient is less than or equal to the first sum and the predetermined second accumulation threshold is less than or equal to the first sum, and S106 is performed to lower one level from the current playback level, and S105 is performed in response to determining that the product of the size of the cached data and the predetermined second accumulation coefficient is greater than the first sum or the predetermined second accumulation threshold is greater than the first sum, that is, the network is changed in a reasonable range (a network state between the first-level congested state and the second-level congested state), such that whether to maintain the playback level with the playback bitrate greater than the predicted bandwidth or lower the playback level are determined.

In S105, a target playback level is determined from the current playback level and playback levels lower than the current playback level based on the predicted bandwidth, the size of the cached data, and a predetermined second cache threshold in response to determining that the network is in a non-second-level congested state.

For example, in the case that the network is determined to be in the non-second-level congested state, the playback level with the playback bitrate less than the predicted bandwidth is determined as the first candidate playback level, whether the playback level with the playback bitrate greater than the predicted bandwidth and the current playback level are the second candidate playback levels based on the predicted bandwidth, the size of the cached data, and the predetermined second cache threshold, and the playback level with the highest level is determined from the first candidate playback levels and the second candidate playback levels and is determined as the target playback level.

In S106, a playback level at least one level lower than the current playback level is determined as a target playback level in response to determining that the network is in the second-level congested state.

After the network is determined to be in the second-level congested state, all playback levels with the playback bitrates less than the predicted bandwidth are acquired and determined as the candidate playback levels, the playback level with the highest level is selected from all candidate playback levels and is determined as the target playback level for lowering the level, and the playback level with one level lower than the current playback level is determined as the target playback level in the case that the playback level with the highest level is selected from all candidate playback levels and is determined as the target playback level.

In the embodiments of the present disclosure, the data of the video sending state, a size of cached data, and a predicted bandwidth are acquired, and whether a network is in a first-level congested state is determined based on the data of the video sending state and the size of the cached data. The target playback level higher than a current playback level is determined based on the predicted bandwidth, the size of the cached data, and a predetermined first cache threshold in response to determining that the network is not in the first-level congested state, and whether the network is in a second-level congested state is determined based on the data of the video sending state and the size of the cached data in response to determining that the network is in the first-level congested state. The target playback level is determined from the current playback level and the playback levels lower than the current playback level based on the predicted bandwidth, the size of the cached data, and the predetermined second cache threshold in response to determining that the network is in a non-second-level congested state, and the playback level at least one level lower than the current playback level is determined as the target playback level in response to determining that the network is in the second-level congested state. In the embodiments of the present disclosure, whether to raise the level or lower the lever is determined by combining the predicted bandwidth and the size of the cached data, different cache thresholds are set for raising the level and lowering the level, and different network congested states are set for raising the level and lowering the level, such that whether to raise the level or lower the lever is determined by combining the network congested state, the size of the cached data, and the predicted bandwidth. Thus, the case of the video lag caused by switching the playback level with inaccurate bandwidth prediction is avoided, the case of the frequent switch of the playback level caused by the single cache threshold and the changed network in switching the level is also avoided, and thus the definition and the fluency are balanced in playing back videos.

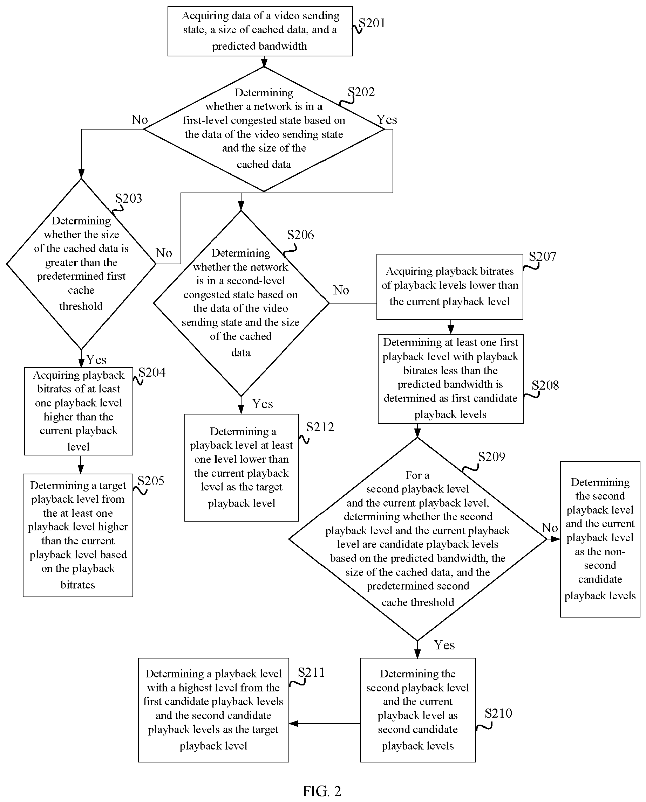

FIG. 2 is a flowchart of a method for determining a video playback level according to some embodiments of the present disclosure, and the embodiments of the present are further detailed on the basis of the above embodiments. For example, as shown in FIG. 2, the method for determining the video playback level according to some embodiments of the present disclosure includes the following processes.

In S201, data of a video sending state, a size of cached data, and a predicted bandwidth are acquired.

In the embodiments of the present disclosure, the data of the video sending state incudes the size of the unsent data durFrameList and the size of the unreceived data inflightLen, the size of the cached data jitterLen is the size of the video data cached in the video playback client, and the predicted bandwidth bw is the network bandwidth predicted between the server and the video playback client.

In the embodiments, the data of the video sending state, the size of the cached data, and the predicted bandwidth are directly or indirectly collected by setting a data collecting apparatus on the network.

In S202, whether a network is in a first-level congested state is determined based on the data of the video sending state and the size of the cached data.

In the embodiments of the present disclosure, a first sum of the size of the unsent data and the size of the unreceived data is calculated, and whether the size of the cached data is greater than or equal to a product of the first sum and a predetermined first accumulation coefficient and whether the first sum is less than or equal to a predetermined first accumulation threshold are determined. The network is in a non-congested state in response to determining that the size of the cached data is less than the product of the first sum and the predetermined first accumulation coefficient or the first sum is greater than the predetermined first accumulation threshold, and the network is in the first-level congested state in response to determining that the size of the cached data is greater than or equal to the product of the first sum and the predetermined first accumulation coefficient and the first sum is less than or equal to the predetermined first accumulation threshold. That is, the network is in the non-congested state in the case that the following two conditions are simultaneously met, and the network is in the first-level congested state in the case that the following two conditions are not simultaneously met: $jitterLen \geq {k}_{1} \times \left(durFrameList+inflightLen\right)$ ${J}_{1} \geq durFrameList + inflightLen$

k1 represents the first accumulation coefficient, and J1 represents the first accumulation threshold.

In the embodiments of the present disclosure, whether the network is congested is determined based on the size of the cached data, the accumulation threshold, the size of the unsent data, and the size of the unreceived data, such that the determination of the network congestion based on the size of the data sent and received over the network is achieved. Compared with the determination of the network congestion based on the time delay, the accuracy of the determination of the congested network state is greater, and thus is more suitable to the scenario of the data stream transmission in playing back the video data.

In the case that the above conditions are simultaneously met, the network is in the non-congested state. That is, the network state is greater than the first-level congested state, and thus S203 to S205 are performed. In the case that the network is in the first-level congested state, S206 to S212 are performed.

In S203, whether the size of the cached data is greater than the predetermined first cache threshold is determined.

In the embodiments of the present disclosure, the first cache threshold J0 is a minimum cache threshold required in raising the playback level. That is, in the case that the size of the cached data is less than the first cache threshold J0, the playback level is not raised. Thus, whether the size of the cached data is greater than the predetermined first cache threshold J0 is determined. In the case of determining that the size of the cached data is greater than the first cache threshold, the network is in the non-congested state, and the bandwidth is raised, such that S204 to S205 are performed to raise the playback level. In the case of determining that the size of the cached data is less than or equal to the first cache threshold, the network is in the non-congested state, and the bandwidth is not raised, such that the playback level with the playback bitrate greater than the predicted bandwidth is maintained or the level is lowered, and S206 to S212 are performed.

**In** S204, playback bitrates of at least one playback level higher than the current playback level are acquired.

**In** some embodiments, the current playback level is the standard definition, and at least one playback level higher than the current playback level includes the high-definition, the super definition, and the playback levels with greater definitions. The higher the playback level, the greater the playback bitrate. In the embodiments of the present disclosure, the server receives playback bitrates at several playback levels in receiving the data from the video data sending end. The playback bitrate is related to the video acquiring device and the codes on the video data sending end. For the video data, playback bitrates corresponding to several playback levels are set on the video data sending end.

**In** S205, the target playback level is determined from the at least one playback level higher than the current playback level based on the playback bitrates.

**In** the embodiments of the present disclosure, for any two adjacent first playback level and second playback level that are higher than the current playback level, a level-raising coefficient of the first playback level is acquired by calculating a ratio of a playback bitrate of the second playback level to a playback bitrate of the first playback level, and the second playback level is higher than the first playback level. A product of the playback bitrate of the first playback level and the level-raising coefficient is calculated, and whether the predicted bandwidth is greater than the product is determined. The first playback level is determined as a candidate playback level in response to determining that the predicted bandwidth is greater than the product and a highest level is selected from candidate playback levels and determined as the target playback level.

For example, assuming that x and x+1 respectively represent any two adjacent first playback level and second playback level that are higher than the current playback level, *br(x)* represents the playback bitrate of the first playback level, *br(x +* 1) represents the playback bitrate of the second playback level. In some embodiments, the level-raising coefficient *α*(*x*) for raising the first playback level x to the second playback level x+1 is calculated by: $α \left(x\right) = br \left(x+1\right) / br \left(x\right)$

For example, after the ratio of *br(x + 1)*/ *br(x)* is acquired, a smaller value is determined from the ratio and the predetermined maximum level-raising coefficient αmax, and a larger value is determined from the smaller value and the predetermined minimum level-raising coefficient αmin. That is, *α*(*x*) is also calculated as follows: $α \left(x\right) = max \left(min\left(br\left(x+1\right)/br\left(x\right),{α}_{max}\right),{α}_{min}\right)$

In the case that the playback level is the highest playback level, the level-raising coefficient of the highest playback level is αmin.

The current playback level is raised to the playback level x in the case that the following condition is met: $bw \geq br \left(x\right) \times α \left(x\right)$

It should be noted that in the case that several playback levels to be raised exist, a playback level with the highest level is selected from the several playback levels to be raised and is determined as the target playback level. In some embodiments, the current playback level is the low definition, and the super definition is determined as the target playback level in the case that the standard definition, the high definition, and the super definition are all met the level-raising condition.

The level-raising coefficient *α*(*x*) between the playback levels set in the embodiments of the present disclosure can ensure to raise to playback level x in the case that the predicted bandwidth bw meets the playback level x+1, such that the case that the level is difficult to raise due to the great difference between the playback levels or the level is raised and lowered repeatedly due to the less difference between the playback levels is avoided. Thus, the level is raised to higher and proper level in time in the case that the network is great, and the level is avoided to be raised and lowered repeatedly due to changed network. In addition, the level-raising coefficient is assigned based on the ratio of the playback bitrates between the playback levels, such that different transcoding lists in the live-streaming rooms are greatly adapted.

It should be noted that in the case that the predicted bandwidth is less than all products of the playback bitrates and the level-raising coefficient, no proper playback level is used to raise, the predicted bandwidth does not support the level-raising, and S206 to S212 are performed to determine whether to maintain at the playback level with the playback bitrate greater than the predicted bandwidth or to lower the playback level.

**In** S206, whether the network is in a second-level congested state is determined based on the data of the video sending state and the size of the cached data.

**In** the embodiments of the present disclosure, a first sum of the size of the unsent data and the size of the unreceived data is calculated, and whether a product of the size of the cached data and a predetermined second accumulation coefficient is less than or equal to the first sum and whether a predetermined second accumulation threshold is less than or equal to the first sum are determined. The network is determined to be in the second-level congested state in response to determining that the product of the size of the cached data and the predetermined second accumulation coefficient is less than or equal to the first sum and the predetermined second accumulation threshold is less than or equal to the first sum, and thus S212 is performed. The network is determined to be in the non-second-level congested state in response to determining that the product of the size of the cached data and the predetermined second accumulation coefficient is greater than the first sum or the predetermined second accumulation threshold is greater than the first sum, and thus S207 to S211 are performed to determine whether to maintain at the playback level with the playback bitrate greater than the predicted bandwidth or to lower the playback level. For example, the network is determined to be in the second-level congested state in meeting the following conditions, and the network is determined to be in the non-second-level congested state in not meeting the following conditions: ${k}_{2} \times jitterLen \leq \left(durFrameList+inflightLen\right)$ ${J}_{2} \leq durFrameList + inflightLen$

k2 represents the second accumulation coefficient, and J2 represents the second accumulation threshold.

In the embodiments of the present disclosure, whether the network is congested is determined based on the size of the cached data, the accumulation threshold, the size of the unsent data, and the size of the unreceived data, such that the determination of the network congestion based on the size of the data sent and received over the network is achieved. Compared with the determination of the network congestion based on the time delay, the accuracy of the determination of the congested network state is greater, and thus is more suitable to the scenario of the data stream transmission in playing back the video data.

In S207, playback bitrates of playback levels lower than the current playback level are acquired.

Illustratively, after the network is determined to be in the first-level congested state and does not meet the level-raising condition, in the case that the network is in the non-second-level congested state, that is, the network state is between the first-level congested state or the second-level congested state and does not meet the level-raising condition, the playback level is maintained at the playback level with the playback bitrate greater than the predicted bandwidth or is lowered, and the playback bitrates of all playback levels lower than the current playback level are acquired.

In S208, at least one first playback level with playback bitrates less than the predicted bandwidth is determined as first candidate playback levels.

**In** the case that the playback bitrate of the first playback level lower than the current playback level is lower than the predicted bandwidth, the first playback level is determined as the first candidate playback level for lowering the level.

It should be noted that the playback level with the lowest playback level is determined as the first candidate playback level in the case that all playback bitrates are greater than the predicted bandwidth.

In S209, for a second playback level and the current playback level, whether the second playback level and the current playback level are candidate playback levels is determined based on the predicted bandwidth, the size of the cached data, and the predetermined second cache threshold, wherein the second playback level is a playback level with a playback bitrate greater than the predicted bandwidth and less than a playback bitrate of the current playback level.

S210 to S211 are performed in response to determining that the second playback level and the current playback level are candidate playback levels, and the second playback level and the current playback level are determined as the non-second candidate playback levels in response to determining that the second playback level and the current playback level are not the candidate playback levels.

**In** the embodiments of the present disclosure, the playback level with the playback bitrate greater than the predicted bandwidth and less than the playback bitrate of the current playback level is determined as the second playback level, and whether the second playback level and the current playback level are the candidate playback levels is determined.

In the embodiments of the present disclosure, the second playback level and the current playback level are determined as the candidate playback levels. For each candidate playback level, a screen set length and a screen set non-sending ratio corresponding to the current playback level are acquired, a dynamic cache threshold is calculated based on a level-lowering coefficient, the screen set length, the ratio, and a predetermined desired duration, and a greater cache threshold is determined from the dynamic cache threshold and the second cache threshold. Whether the predicted bandwidth is greater than or equal to a product of a playback bitrate of the candidate playback level and the level-lowering coefficient and whether the size of the cached data is greater than a sum of the greater cache threshold and the size of the unreceived data are determined. The candidate playback level is determined as the candidate playback level in response to determining that the predicted bandwidth is greater than or equal to the product of the playback bitrate of the each candidate playback level and the level-lowering coefficient and the size of the cached data is greater than the sum of the greater cache threshold and the size of the unreceived data, and the candidate playback level is determined as a non-candidate playback level in response to determining that the predicted bandwidth is less than or equal to the product of the playback bitrate of the each candidate playback level and the level-lowering coefficient or the size of the cached data is less than or equal to the sum of the greater cache threshold and the size of the unreceived data.

Illustratively, the dynamic cache threshold is equal to the sum of the first accumulation threshold j1 and the second accumulation threshold j2. In some embodiments, the first accumulation threshold j1 is the size of the cache data required for waiting bandwidth recovery, and the first accumulation threshold j1 is calculated as follows:

The playback level is lowered to the candidate playback level x with the playback bitrate greater than the predicted bandwidth bw based on the level-lowering coefficient, and the playback bitrate *br(x)* the candidate playback level meets: $bw \geq br \left(x\right) \times β > bw \times β$

β represents the level-lowering coefficient, and β∈(0,1).

In the case that the consumed duration in switching the playback level is not considered, the size of the cached data is slowly reduced as the predicted bandwidth bw is less than the current playback bitrate *br(x)* at the following rate per second: $Δ = br \left(x\right) / bw - 1$
and thus: $0 < Δ \leq 1 / β - 1 .$

In the case that the network bandwidth change is recovered in a predetermined desirable duration t, and then: ${j}_{1} > t \times Δ .$

Thus, the video is not jagged in playing back in the case that *j*₁ > *t* × (1 - *β*) /*β*.

In some embodiments, the second accumulation threshold j2 is the size of the cache data required for sending the video data at the current playback level before switching the playback level. The second accumulation threshold j2 is calculated as follows:

Assuming that playback level is switched to a new playback level on the network screen set, and the current screen set length of the current playback level is gopLen, a proportion of the non-sending screen meets 0 < y < 1, and thus the cache data required for sending the screen set is: ${j}_{2} = \left(br\left(x\right)/bw-1\right) \times gopLen \times γ .$

Thus, the dynamic cache threshold *J* = *j*₁ + *j*₂.

The candidate playback level is determined in the case that the following two conditions are met: $bw \geq br \left(x\right) \times β$ 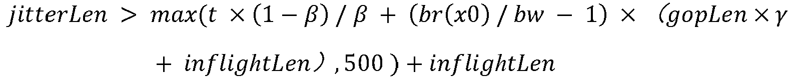 jitterLen > max(t × (1 - β) / β + (br(x0) / bw - 1) × (gopLen × γ + inflightLen) , 500 ) + inflightLen

As described in the following formulas, the second cache threshold can be set as 500.

In the embodiments of the present disclosure, the dynamic cache threshold is calculated based on the level-lowering coefficient, the screen set length, the ratio, and the predetermined desired duration, such that the cache threshold and the network state are adapted. The cache threshold is dynamically adjusted to determine whether the playback level with the playback bitrate greater than the predicted bandwidth is determined as the candidate playback level. Compared with the case that only the playback level with the playback bitrate less than the predicted bandwidth is determined as the candidate playback level, the embodiments can maximize the use of the network bandwidth. Thus, the definition of the video playback is ensured, and the frequent switch of the playback level due to the level lowering in the case that the size of the cached data is less than a fixed cache threshold is avoided. In addition, the dynamic cache threshold can be used to determine the congested risk greatly, such that the lag caused by the untimely level lowering is avoided, and the fluency of the video playback is ensured.

In S210, the second playback level and the current playback level are determined as second candidate playback levels.

In the case that the second playback level and the current playback level are determined as the candidate playback levels based on the predicted bandwidth, the size of the cached data, and the predetermined second cache threshold, the second playback level and the current playback level are determined as the second candidate playback levels.

In S211, a playback level with a highest level is determined from the first candidate playback levels and the second candidate playback levels as the target playback level.

In the embodiments of the present disclosure, the first candidate playback levels and the second candidate playback levels respectively include several playback levels, and thus a playback level with a highest level is determined from all playback levels in the first candidate playback levels and the second candidate playback levels as the target playback level.

In S212, a playback level at least one level lower than the current playback level is determined as the target playback level.

Illustratively, all playback levels with the playback bitrates less than the predicted bandwidth are acquired and determined as the candidate playback levels, the playback level with the highest level is selected from all candidate playback levels and is determined as the target playback level for lowering the level, and the playback level with one level lower than the current playback level is determined as the target playback level in the case that the playback level with the highest level is selected from all candidate playback levels and is determined as the target playback level.

In the embodiments of the present disclosure, whether to raise the level or lower the lever is determined by combining the predicted bandwidth and the size of the cached data, different cache thresholds are set for raising the level and lowering the level, and different network congested states are set for raising the level and lowering the level, such that whether to raise the level or lower the lever is determined by combining the network congested state, the size of the cached data, and the predicted bandwidth. Thus, the case of the video lag caused by switching the playback level with inaccurate bandwidth prediction is avoided, the case of the frequent switch of the playback level caused by the single cache threshold and the changed network in switching the level is also avoided, and thus the definition and the fluency are balanced in playing back videos.

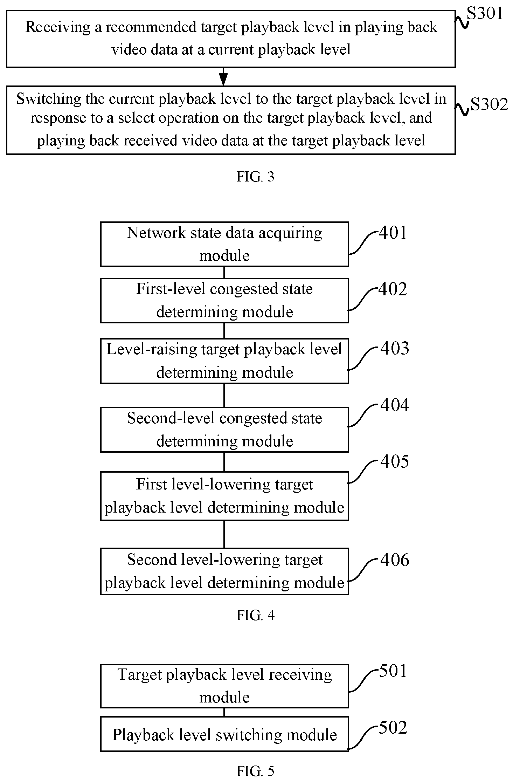

FIG. 3 is a flowchart of a method for playing back videos according to some embodiments of the present disclosure. The embodiments of the present disclosure are applicable to the case of video playback. The method is performed by the apparatus for playing back the videos according to some embodiments of the present disclosure, the apparatus for playing back the videos is achieved by hardware or software and is integrated in the electronic device according to some embodiments of the present disclosure. Illustratively, as shown in FIG. 3, the method for playing back the videos according to some embodiments of the present disclosure includes the following processes.

In S301, a recommended target playback level is received in playing back video data at a current playback level.

The server receives video data from the video sending end and then pushes the video data to the video data receiving end to play back the video data on the video receiving end. The video receiving end plays back the video data at an appointed playback level. The playback level includes the low definition, the standard definition, the high-definition, the super definition, and the like.

In pushing the video data, the server determines the target playback level based on the data of the video sending state and the predicted bandwidth between the server and the video data receiving end and the size of the cached data on the video data receiving end, and recommends the target playback level to the video data receiving end.

Illustratively, the server determines the target playback level by the method for determining the video playback level in the above embodiments, and the detailed descriptions are referred to the above embodiments, which are not repeated.

In S302, the current playback level is switched to the target playback level in response to a select operation on the target playback level, and received video data is played back at the target playback level.

The video data receiving end plays back the video data upon receiving the video data. In the case that the target playback level recommended by the server is received, prompt information and an option for selecting the target playback level to playing back the video data are generated. In the case that the select operation on the option is detected, the current playback level is switched to the target playback level in response to the select operation, and the received video data is played back at the target playback level. Illustratively, the standard definition is switched to the high definition, or the super definition is switched to the standard definition, and the like.

In the method for playing back the videos in the embodiments of the present disclosure, the target playback level is determined by the method for determining the video playback level in the above embodiments. That is, the dynamic cache threshold is calculated based on the level-lowering coefficient, the screen set length, the ratio, and the predetermined desired duration, such that the cache threshold and the network state are adapted. The determination of whether to lower the level based on the cache threshold can maximize the use of the network bandwidth. In addition, whether to maintain the level in the network congestion can be accurately determined based on the cache threshold, such that the network congestion is avoided, the frequent raising or lowering of the playback level due to the level lowering in the case that the size of the cached data is less than a fixed cache threshold is avoided, and the definition and the fluency of the video playback are ensured.

FIG. 4 is a structural diagram of an apparatus for determining a video playback level according to some embodiments of the present disclosure. As shown in FIG. 4, the apparatus for determining the video playback level according to some embodiments of the present disclosure includes:
a network state data acquiring module 401, configured to acquire data of a video sending state, a size of cached data, and a predicted bandwidth;
a first-level congested state determining module 402, configured to determine, based on the data of the video sending state and the size of the cached data, whether a network is in a first-level congested state;
a level-raising target playback level determining module 403, configured to determine a target playback level higher than a current playback level based on the predicted bandwidth, the size of the cached data, and a predetermined first cache threshold;
a second-level congested state determining module 404, configured to determine whether the network is in a second-level congested state based on the data of the video sending state and the size of the cached data, wherein a congestion degree of the second-level congested state is greater than a congestion degree of the first-level congested state;
a first level-lowering target playback level determining module 405, configured to determine a target playback level from the current playback level and playback levels lower than the current playback level based on the predicted bandwidth, the size of the cached data, and a predetermined second cache threshold in response to determining that the network is in a non-second-level congested state; and
a second level-lowering target playback level determining module 406, configured to determine a playback level at least one level lower than the current playback level as a target playback level.

The apparatus for determining the video playback level according to some embodiments of the present disclosure is capable to performing the method for determining the video playback level according to above embodiments of the present disclosure and has corresponding functional modules and technical effects compared with performing the method.

FIG. 5 is a structural diagram of an apparatus for playing back videos according to some embodiments of the present disclosure. As shown in FIG. 5 the apparatus for playing back the videos according to some embodiments of the present disclosure includes:
a target playback level receiving module 501, configured to receive a recommended target playback level in playing back video data at a current playback level; and
a playback level switching module 502, configured to switch from the current playback level to the target playback level in response to a select operation on the target playback level, and play back received video data at the target playback level,
the target playback level is determined according to the method for determining the video playback level in the above embodiments.

The apparatus for playing back the videos according to some embodiments of the present disclosure is capable to performing the method for playing back the videos according to above embodiments of the present disclosure and has corresponding functional modules and technical effects compared with performing the method.

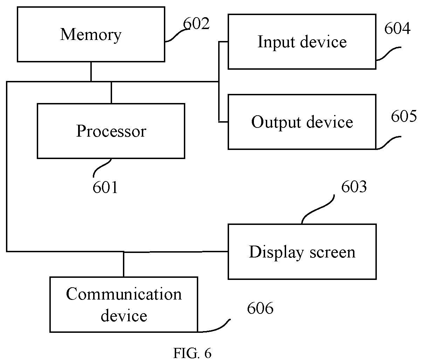

Referring to FIG.6, a schematic structural diagram of an electronic device according to some embodiments of the present disclosure is shown. As shown in FIG. 6, the electronic device includes: a processor 601, a memory 602, a display screen 603 with a touch function, an input device 604, an output device 605, and a communication device 606. One or more processor 601 are set in the electronic device, and FIG. 6 is shown by taking one processor 601 as an example. The processor 601, the memory 602, the display screen 603, the input device 604, the output device 605, and the communication device 606 are connected by a bus or other manner, and FIG. 6 is shown by taking the bus as an example. The electronic device performs the method for determining the video playback level and/or the method for playing back videos in any embodiment of the present disclosure.

A computer-readable storage medium is further provided in the embodiments of the present disclosure. The instructions in the storage medium, when loaded and run by a processor of a device, cause the device to perform the method for determining the video playback level and/or the method for playing back the videos in the above embodiments.

It should be noted that the embodiments of the apparatus, the electronic device, and the storage medium are the similar to the embodiments of the methods, and thus the descriptions are simple, and the related descriptions are referred to the embodiments of the methods.

## Claims

1. A method for determining a video target playback level, **characterized by** comprising:
acquiring (S101, S201) data of a video sending state, a size of cached data, and a predicted bandwidth, wherein the data of the video sending state comprises a size of unsent data and a size of unreceived data;
determining (S102, S202), based on the data of the video sending state and the size of the cached data, whether a network is in a first-level congested state, wherein the first-level congested state is a condition used to determine whether to raise a playback level in playing back a video, the playback level representing a level of a video playback definition;
determining (S103) a target playback level higher than a current playback level based on the predicted bandwidth, the size of the cached data, and a predetermined first cache threshold in response to determining that the network is not in the first-level congested state;
determining (S104, S206), based on the data of the video sending state and the size of the cached data, whether the network is in a second-level congested state in response to determining that the network is in the first-level congested state, wherein a congestion degree of the second-level congested state is greater than a congestion degree of the first-level congested state, the congestion degree representing a congestion of the network when processing data traffic;
determining (S105) a target playback level from the current playback level and playback levels lower than the current playback level based on the predicted bandwidth, the size of the cached data, and a predetermined second cache threshold in response to determining that the network is in a non-second-level congested state; and
determining (S106, S212) a playback level at least one level lower than the current playback level as a target playback level in response to determining that the network is in the second-level congested state.

2. The method according to claim **1,** wherein determining (S102, S202), based on the data of the video sending state and the size of the cached data, whether the network is in the first-level congested state comprises:
calculating a first sum of the size of the unsent data and the size of the unreceived data;
determining whether the size of the cached data is greater than or equal to a product of the first sum and a predetermined first accumulation coefficient and whether the first sum is less than or equal to a predetermined first accumulation threshold;
determining that the network is in the first-level congested state in response to determining that the size of the cached data is greater than or equal to the product of the first sum and the predetermined first accumulation coefficient and the first sum is less than or equal to the predetermined first accumulation threshold; and
determining that the network is in a non-congested state in response to determining that the size of the cached data is less than the product of the first sum and the predetermined first accumulation coefficient or the first sum is greater than the predetermined first accumulation threshold.

3. The method according to claim 1, wherein determining (S103) the target playback level higher than the current playback level based on the predicted bandwidth, the size of the cached data, and the predetermined first cache threshold comprises:
determining (S203) whether the size of the cached data is greater than the predetermined first cache threshold;
acquiring (S204) playback bitrates of at least one playback level higher than the current playback level in response to determining that the size of the cached data is greater than the predetermined first cache threshold;
determining (S205) the target playback level from the at least one playback level higher than the current playback level based on the playback bitrates; and
performing the process of determining, based on the data of the video sending state and the size of the cached data, whether the network is in the second-level congested state in response to determining that the size of the cached data is less than or equal to the predetermined first cache threshold.

4. The method according to claim 3, wherein determining (S204) the target playback level from the at least one playback level higher than the current playback level based on the playback bitrates comprises:
for any two adjacent first playback level and second playback level that are higher than the current playback level, acquiring a level-raising coefficient of the first playback level by calculating a ratio of a playback bitrate of the second playback level to a playback bitrate of the first playback level, wherein the second playback level is higher than the first playback level;
calculating a product of the playback bitrate of the first playback level and the level-raising coefficient;
determining whether the predicted bandwidth is greater than the product;
determining the first playback level as a candidate playback level in response to determining that the predicted bandwidth is greater than the product; and
selecting a highest level from candidate playback levels and determining as the target playback level;
for any two adjacent first playback level and second playback level that are higher than the current playback level, acquiring the level-raising coefficient of the first playback level by calculating the ratio of the playback bitrate of the second playback level to the playback bitrate of the first playback level comprises:
calculating, for any two adjacent first playback level and second playback level that are higher than the current playback level, the ratio of the playback bitrate of the second playback level to the playback bitrate of the first playback level;
determining a smaller value from the ratio and a predetermined maximum level-raising coefficient; and
determining a larger value from the smaller value and a predetermined minimum level-raising coefficient as the level-raising coefficient.

5. The method according to claim 4, further comprising:
performing the process of determining, based on the data of the video sending state and the size of the cached data, whether the network is in the second-level congested state in response determining that the predicted bandwidth is less than the product.

6. The method according to any one of claims 1 to 5, wherein
the data of the video sending state comprises a size of unsent data and a size of unreceived data, and
determining (S104, S206), based on the data of the video sending state and the size of the cached data, whether the network is in the second-level congested state comprises:
calculating a first sum of the size of the unsent data and the size of the unreceived data;
determining whether a product of the size of the cached data and a predetermined second accumulation coefficient is less than or equal to the first sum and whether a predetermined second accumulation threshold is less than or equal to the first sum;
determining the network is in the second-level congested state in response to determining that the product of the size of the cached data and the predetermined second accumulation coefficient is less than or equal to the first sum and the predetermined second accumulation threshold is less than or equal to the first sum; and
determining the network is in the non-second-level congested state in response to determining that the product of the size of the cached data and the predetermined second accumulation coefficient is greater than the first sum or the predetermined second accumulation threshold is greater than the first sum.

7. The method according to any one of claims 1 to 5, wherein determining (S105) the target playback level from the current playback level and the playback levels lower than the current playback level based on the predicted bandwidth, the size of the cached data, and the predetermined second cache threshold in response to determining that the network is in the non-second-level congested state comprises:
acquiring (S207) playback bitrates of playback levels lower than the current playback level;
determining (S208) at least one first playback level with playback bitrates less than the predicted bandwidth as first candidate playback levels;
for a second playback level and the current playback level, determining (S209), based on the predicted bandwidth, the size of the cached data, and the predetermined second cache threshold, whether the second playback level and the current playback level are candidate playback levels, wherein the second playback level is a playback level with a playback bitrate greater than the predicted bandwidth and less than a playback bitrate of the current playback level;
determining (S210) the second playback level and the current playback level as second candidate playback levels in response to determining that the second playback level and the current playback level are candidate playback levels; and
determining (S211) a playback level with a highest level from the first candidate playback levels and the second candidate playback levels as the target playback level.

8. The method according to claim 7, wherein for the second playback level and the current playback level, determining (S209), based on the predicted bandwidth, the size of the cached data, and the predetermined second cache threshold, whether the second playback level and the current playback level are the candidate playback levels comprises:
for each candidate playback level in the second playback level and the current playback level, acquiring a current playback bitrate of the current playback level;
acquiring a screen set length and a screen set non-sending ratio corresponding to the current playback level;
calculating a dynamic cache threshold based on a predetermined level-lowering coefficient, the screen set length, the ratio, and a predetermined desired duration;
determining a greater cache threshold from the dynamic cache threshold and the predetermined second cache threshold;
determining whether the predicted bandwidth is greater than or equal to a product of a playback bitrate of the each candidate playback level and the predetermined level-lowering coefficient and whether the size of the cached data is greater than a sum of the greater cache threshold and a size of unreceived data;
determining the each candidate playback level as the candidate playback level in response to determining that the predicted bandwidth is greater than or equal to the product of the playback bitrate of the each candidate playback level and the predetermined level-lowering coefficient and the size of the cached data is greater than the sum of the greater cache threshold and the size of the unreceived data; and
determining the each candidate playback level as a non-candidate playback level in response to determining that the predicted bandwidth is less than or equal to the product of the playback bitrate of the each candidate playback level and the predetermined level-lowering coefficient or the size of the cached data is less than or equal to the sum of the greater cache threshold and the size of the unreceived data;
calculating the dynamic cache threshold based on the predetermined level-lowering coefficient, the screen set length, the ratio, and the predetermined desired duration comprises:
calculating a first dynamic threshold *j*₁ by the following formula: *j*₁ = *t* × (1 - *β*) /*β*, wherein *β* represents the level-lowering coefficient, and *t* represents the predetermined desired duration;
calculating a second dynamic threshold *j*₂ by the following formula: *j*₂ = (*br*(*x*0) / *bw -* 1) × *gopLen* × γ *,* wherein *br*(*x*0) represents the current playback bitrate, bw represents the predicted bandwidth, *gopLen* represents the screen set length, and *y* represents the screen set non-sending ratio; and
calculating a sum of the first dynamic threshold and the second dynamic threshold, and determining the sum as the dynamic cache threshold.

9. The method according to any one of claims 1 to 5, wherein determining (S106, S212) the playback level at least one level lower than the current playback level as the target playback level in response to determining that the network is in the second-level congested state comprises:
acquiring playback levels with playback bitrates less than the predicted bandwidth in response to determining that the network is in the second-level congested state; and
determining a highest playback level from the playback levels with the playback bitrates less than the predicted bandwidth as the target playback level.

10. The method according to claim 9, wherein determining the playback level at least one level lower than the current playback level as the target playback level in response to determining that the network is in the second-level congested state further comprises:
determining a playback level one level lower than the current playback level as the target playback level in response to determining the greatest playback level from the playback levels with the playback bitrates less than the predicted bandwidth as the current playback level.

11. A method for playing back videos, **characterized by** comprising:
receiving (S301) a recommended target playback level in playing back video data at a current playback level; and
switching (S302) from the current playback level to the recommended target playback level in response to a select operation on the recommended target playback level, and playing back received video data at the recommended target playback level, wherein the recommended target playback level is determined according to the method for determining the video target playback level as defined in any one of claims 1 to 10.

12. An apparatus for determining a video target playback level, **characterized by** comprising:
a network state data acquiring module (401), configured to acquire data of a video sending state, a size of cached data, and a predicted bandwidth, wherein the data of the video sending state comprises a size of unsent data and a size of unreceived data;
a first-level congested state determining module (402), configured to determine, based on the data of the video sending state and the size of the cached data, whether a network is in a first-level congested state, wherein the first-level congested state is a condition used to determine whether to raise a playback level in playing back a video, the playback level representing a level of a video playback definition;
a level-raising target playback level determining module (403), configured to determine a target playback level higher than a current playback level based on the predicted bandwidth, the size of the cached data, and a predetermined first cache threshold in response to determining that the network is not in the first-level congested state;
a second-level congested state determining module (404), configured to determine, based on the data of the video sending state and the size of the cached data, whether the network is in a second-level congested state in response to determining that the network is in the first-level congested state, wherein a congestion degree of the second-level congested state is greater than a congestion degree of the first-level congested state, the congestion degree representing a congestion of the network when processing data traffic;
a first level-lowering target playback level determining module (405), configured to determine a target playback level from the current playback level and playback levels lower than the current playback level based on the predicted bandwidth, the size of the cached data, and a predetermined second cache threshold in response to determining that the network is in a non-second-level congested state; and
a second level-lowering target playback level determining module (406), configured to determine a playback level at least one level lower than the current playback level as a target playback level in response to determining that the network is in the second-level congested state.

13. An apparatus for playing back videos, **characterized by** comprising:
a target playback level receiving module (501), configured to receive a recommended target playback level in playing back video data at a current playback level; and
a playback level switching module (502), configured to switch from the current playback level to the recommended target playback level in response to a select operation on the recommended target playback level, and play back received video data at the recommended target playback level, wherein the recommended target playback level is determined according to the method for determining the video target playback level as defined in any one of claims 1 to 10.

14. An electronic device, **characterized by** comprising:
one or more processors (601);
a memory, configured to store one or more programs, wherein the one or more processors (601), when loading and running the one or more programs, are caused to perform the method for determining the video target playback level as defined in any one of claims 1 to 10 or the method for playing back the videos as defined in claim 11.

15. A computer-readable storage medium, storing a computer program, **characterized in that** the computer program, when loaded and run by a processor (601), causes the processor to perform the method for determining the video target playback level as defined in any one of claims 1 to 10 or the method for playing back the videos as defined in claim 11.

## Patentansprüche

1. Verfahren zur Bestimmung eines Videozielabspielgrads, **dadurch gekennzeichnet, dass** es umfasst:
Erfassen (S101, S201) von Daten eines Videosendezustands, einer Größe von zwischengespeicherten Daten und einer vorhergesagten Bandbreite, wobei die Daten des Videosendezustands eine Größe von nicht gesendeten Daten und eine Größe von nicht empfangenen Daten umfassen;
Bestimmen (S102, S202), auf der Grundlage der Daten des Videosendezustands und der Größe der zwischengespeicherten Daten, ob sich ein Netzwerk in einem Überlastungszustand der ersten Stufe befindet, wobei der Überlastungszustand der ersten Stufe eine Bedingung ist, die verwendet wird, um zu bestimmen, ob beim Abspielen eines Videos ein Abspielgrad hochgestuft wird, wobei der Abspielgrad einen Grad einer Videoabspieldefinition darstellt;
Bestimmen (S103) eines Zielabspielgrads, der höher als ein aktueller Abspielgrad ist, auf der Grundlage der vorhergesagten Bandbreite, der Größe der zwischengespeicherten Daten und einer vorbestimmten ersten Zwischenspeicher-Schwelle als Reaktion auf das Bestimmen, dass sich das Netzwerk nicht in dem Überlastungszustand der ersten Stufe befindet;
Bestimmen (S104, S206), auf der Grundlage der Daten des Videosendezustands und der Größe der zwischengespeicherten Daten, ob sich das Netzwerk in einem Überlastungszustand der zweiten Stufe befindet, als Reaktion auf das Bestimmen, dass sich das Netzwerk in dem Überlastungszustand der ersten Stufe befindet, wobei ein Überlastungsgrad des Überlastungszustands der zweiten Stufe größer ist als ein Überlastungsgrad des Überlastungszustands der ersten Stufe, wobei der Überlastungsgrad eine Überlastung des Netzwerks beim Verarbeiten von Datenverkehr darstellt;
Bestimmen (S105) eines Zielabspielgrads aus dem aktuellen Abspielgrad und Abspielgraden, die niedriger als der aktuelle Abspielgrad sind, auf der Grundlage der vorhergesagten Bandbreite, der Größe der zwischengespeicherten Daten und einer vorbestimmten zweiten Zwischenspeicher-Schwelle als Reaktion auf das Bestimmen, dass sich das Netzwerk in einem Zustand ohne Überlastung der zweiten Stufe befindet; und
Bestimmen (S106, S212) eines Abspielgrads, der mindestens einen Grad niedriger als der aktuelle Abspielgrad ist, als Zielabspielgrad als Reaktion auf das Bestimmen, dass sich das Netzwerk in dem Überlastungszustand der zweiten Stufe befindet.

2. Verfahren nach Anspruch 1, wobei Bestimmen (S102, S202) auf der Grundlage der Daten des Videosendezustands und der Größe der zwischengespeicherten Daten, ob sich das Netzwerk in dem Überlastungszustand der ersten Stufe befindet, umfasst:
Berechnen einer ersten Summe der Größe der nicht gesendeten Daten und der Größe der nicht empfangenen Daten;
Bestimmen, ob die Größe der zwischengespeicherten Daten größer als oder gleich einem Produkt der ersten Summe und eines vorbestimmten ersten Akkumulationskoeffizienten ist und ob die erste Summe kleiner als oder gleich einer vorbestimmten ersten Akkumulationsschwelle ist;
Bestimmen, dass sich das Netzwerk in dem Überlastungszustand der ersten Stufe befindet, als Reaktion auf Bestimmen, dass die Größe der zwischengespeicherten Daten größer als oder gleich dem Produkt der ersten Summe und des vorbestimmten ersten Akkumulationskoeffizienten ist und die erste Summe kleiner als oder gleich der vorbestimmten ersten Akkumulationsschwelle ist; und
Bestimmen, dass sich das Netzwerk in einem nicht überlasteten Zustand befindet, als Reaktion auf Bestimmen, dass die Größe der zwischengespeicherten Daten kleiner als das Produkt der ersten Summe und des vorbestimmten ersten Akkumulationskoeffizienten ist oder die erste Summe größer als die vorbestimmte erste Akkumulationsschwelle ist.

3. Verfahren nach Anspruch 1, wobei Bestimmen (S103) des Zielabspielgrads, der höher als der aktuelle Abspielgrad ist, auf der Grundlage der vorhergesagten Bandbreite, der Größe der zwischengespeicherten Daten und der vorbestimmten ersten Zwischenspeicher-Schwelle umfasst:
Bestimmen (S203), ob die Größe der zwischengespeicherten Daten größer als die vorbestimmte erste Zwischenspeicher-Schwelle ist;
Erfassen (S204) von Abspiel-Bitraten von mindestens einem Abspielgrad, der höher als der aktuelle Abspielgrad ist, als Reaktion auf Bestimmen, dass die Größe der zwischengespeicherten Daten größer als die vorbestimmte erste Zwischenspeicher-Schwelle ist;
Bestimmen (S205) des Zielabspielgrads aus dem mindestens einen Abspielgrad, der höher als der aktuelle Abspielgrad ist, auf der Grundlage der Abspiel-Bitraten; und
Durchführen des Prozesses zum Bestimmen auf der Grundlage der Daten des Videosendezustands und der Größe der zwischengespeicherten Daten, ob sich das Netzwerk in dem Überlastungszustand der zweiten Stufe befindet, als Reaktion auf Bestimmen, dass die Größe der zwischengespeicherten Daten kleiner als oder gleich der vorbestimmten ersten Zwischenspeicher-Schwelle ist.

4. Verfahren nach Anspruch 3, wobei Bestimmen (S204) des Zielabspielgrads aus dem mindestens einen Abspielgrad, der höher als der aktuelle Abspielgrad ist, auf der Grundlage der Abspiel-Bitraten umfasst:
für beliebige zwei benachbarte erste Abspielgrade und zweite Abspielgrade, die höher als der aktuelle Abspielgrad sind, Erfassen eines Hochstufungskoeffizienten des ersten Abspielgrads durch Berechnen eines Verhältnisses einer Abspiel-Bitrate des zweiten Abspielgrads zu einer Abspiel-Bitrate des ersten Abspielgrads, wobei der zweite Abspielgrad höher als der erste Abspielgrad ist;
Berechnen eines Produkts der Abspiel-Bitrate des ersten Abspielgrads und des Hochstufungskoeffizienten;
Bestimmen, ob die vorhergesagte Bandbreite größer als das Produkt ist;
Bestimmen des ersten Abspielgrads als Kandidatenabspielgrad als Reaktion auf Bestimmen, dass die vorhergesagte Bandbreite größer als das Produkt ist; und
Auswählen eines höchsten Grads aus Kandidatenabspielgraden und Bestimmen als den Zielabspielgrad;
wobei für beliebige zwei benachbarte erste Abspielgrade und zweite Abspielgrade, die höher als der aktuelle Abspielgrad sind, Erfassen des Hochstufungskoeffizienten des ersten Abspielgrads durch Berechnen des Verhältnisses der Abspiel-Bitrate des zweiten Abspielgrads zu der Abspiel-Bitrate des ersten Abspielgrads umfasst:
Berechnen, für beliebige zwei benachbarte erste Abspielgrade und zweite Abspielgrade, die höher als der aktuelle Abspielgrad sind, des Verhältnisses der Abspiel-Bitrate des zweiten Abspielgrads zu der Abspiel-Bitrate des ersten Abspielgrads;
Bestimmen eines kleineren Werts aus dem Verhältnis und einem vorbestimmten maximalen Hochstufungskoeffizienten; und
Bestimmen eines größeren Werts aus dem kleineren Wert und einem vorbestimmten minimalen Hochstufungskoeffizienten als den Hochstufungskoeffizienten.

5. Verfahren nach Anspruch 4, weiter umfassend:
Durchführen des Prozesses des Bestimmens auf der Grundlage der Daten des Videosendezustands und der Größe der zwischengespeicherten Daten, ob sich das Netzwerk in einem Überlastungszustand der zweiten Stufe befindet, als Reaktion auf Bestimmen, dass die vorhergesagte Bandbreite kleiner als das Produkt ist.

6. Verfahren nach einem der Ansprüche 1 bis 5, wobei
die Daten des Videosendezustands eine Größe von nicht gesendeten Daten und eine Größe von nicht empfangenen Daten umfassen, und
Bestimmen (S104, S206) auf der Grundlage der Daten des Videosendezustands und der Größe der zwischengespeicherten Daten, ob sich das Netzwerk in dem Überlastungszustand der zweiten Stufe befindet, umfasst:
Berechnen einer ersten Summe der Größe der nicht gesendeten Daten und der Größe der nicht empfangenen Daten;
Bestimmen, ob ein Produkt der Größe der zwischengespeicherten Daten und eines vorbestimmten zweiten Akkumulationskoeffizienten kleiner oder gleich der ersten Summe ist und ob ein vorbestimmter zweiter Akkumulationsschwellenwert kleiner oder gleich der ersten Summe ist;
Bestimmen, dass sich das Netzwerk in dem Überlastungszustand der zweiten Stufe befindet, als Reaktion auf Bestimmen, dass das Produkt der Größe der zwischengespeicherten Daten und des vorbestimmten zweiten Akkumulationskoeffizienten kleiner oder gleich der ersten Summe ist und der vorbestimmte zweite Akkumulationsschwellenwert kleiner oder gleich der ersten Summe ist; und
Bestimmen, dass sich das Netzwerk in dem Zustand ohne Überlastung der zweiten Stufe befindet, als Reaktion auf Bestimmen, dass das Produkt der Größe der zwischengespeicherten Daten und des vorbestimmten zweiten Akkumulationskoeffizienten größer als die erste Summe ist oder der vorbestimmte zweite Akkumulationsschwellenwert größer als die erste Summe ist.

7. Verfahren nach einem der Ansprüche 1 bis 5, wobei Bestimmen (S105) des Zielabspielgrads aus dem aktuellen Abspielgrad und den Abspielgraden, die niedriger als der aktuelle Abspielgrad sind, auf der Grundlage der vorhergesagten Bandbreite, der Größe der zwischengespeicherten Daten und der vorbestimmten zweiten Zwischenspeicher-Schwelle als Reaktion auf Bestimmen, dass sich das Netzwerk in dem Zustand ohne Überlastung der zweiten Stufe befindet, umfasst:
Erfassen (S207) von Abspiel-Bitraten von Abspielgraden, die niedriger als der aktuelle Abspielgrad sind;
Bestimmen (S208) mindestens eines ersten Abspielgrads mit Abspiel-Bitraten, die kleiner als die vorhergesagte Bandbreite sind, als erste Kandidatenabspielgrade;
für einen zweiten Abspielgrad und den aktuellen Abspielgrad Bestimmen (S209) auf der Grundlage der vorhergesagten Bandbreite, der Größe der zwischengespeicherten Daten und der vorbestimmten zweiten Zwischenspeicher-Schwelle, ob der zweite Abspielgrad und der aktuelle Abspielgrad Kandidatenabspielgrade sind, wobei der zweite Abspielgrad ein Abspielgrad mit einer Abspiel-Bitrate ist, die größer als die vorhergesagte Bandbreite und kleiner als eine Abspiel-Bitrate des aktuellen Abspielgrads ist;
Bestimmen (S210) des zweiten Abspielgrads und des aktuellen Abspielgrads als zweite Kandidatenabspielgrade als Reaktion auf Bestimmen, dass der zweite Abspielgrad und der aktuelle Abspielgrad Kandidatenabspielgrade sind; und
Bestimmen (S211) eines Abspielgrads mit einem höchsten Grad aus den ersten Kandidatenabspielgraden und den zweiten Kandidatenabspielgraden als den Zielabspielgrad.

8. Verfahren nach Anspruch 7, wobei für den zweiten Abspielgrad und den aktuellen Abspielgrad Bestimmen (S209) auf der Grundlage der vorhergesagten Bandbreite, der Größe der zwischengespeicherten Daten und der vorbestimmten zweiten Zwischenspeicher-Schwelle, ob der zweite Abspielgrad und der aktuelle Abspielgrad die Kandidatenabspielgrade sind, umfasst:
für jeden Kandidatenabspielgrad in dem zweiten Abspielgrad und dem aktuellen Abspielgrad Erfassen einer aktuellen Abspiel-Bitrate des aktuellen Abspielgrads;
Erfassen einer Bildschirmsetlänge und eines Nichtsendungsverhältnisses des Bildschirmsets, die dem aktuellen Abspielgrad entsprechen;
Berechnen einer dynamischen Zwischenspeicher-Schwelle auf der Grundlage eines vorbestimmten Herabstufungskoeffizienten, der Bildschirmsetlänge, des Verhältnisses und einer vorbestimmten gewünschten Dauer;
Bestimmen einer größeren Zwischenspeicher-Schwelle aus der dynamischen Zwischenspeicher-Schwelle und der vorbestimmten zweiten Zwischenspeicher-Schwelle;
Bestimmen, ob die vorhergesagte Bandbreite größer oder gleich einem Produkt einer Abspiel-Bitrate des jeweiligen Kandidatenabspielgrads und des vorbestimmten Herabstufungskoeffizienten ist und ob die Größe der zwischengespeicherten Daten größer als eine Summe der größeren Zwischenspeicher-Schwelle und einer Größe von nicht empfangenen Daten ist;
Bestimmen des jeweiligen Kandidatenabspielgrads als den Kandidatenabspielgrad als Reaktion auf Bestimmen, dass die vorhergesagte Bandbreite größer oder gleich dem Produkt der Abspiel-Bitrate des jeweiligen Kandidatenabspielgrads und des vorbestimmten Herabstufungskoeffizienten ist und die Größe der zwischengespeicherten Daten größer als die Summe der größeren Zwischenspeicher-Schwelle und der Größe der nicht empfangenen Daten ist; und
Bestimmen des jeweiligen Kandidatenabspielgrads als einen Nicht-Kandidatenabspielgrad als Reaktion auf Bestimmen, dass die vorhergesagte Bandbreite kleiner oder gleich dem Produkt der Abspiel-Bitrate des jeweiligen Kandidatenabspielgrads und des vorbestimmten Herabstufungskoeffizienten ist oder die Größe der zwischengespeicherten Daten kleiner oder gleich der Summe der größeren Zwischenspeicher-Schwelle und der Größe der nicht empfangenen Daten ist;
wobei Berechnen der dynamischen Zwischenspeicher-Schwelle auf der Grundlage vom vorbestimmten Herabstufungskoeffizienten, der Bildschirmsetlänge, dem Verhältnis und der vorbestimmten gewünschten Dauer umfasst:
Berechnen einer ersten dynamischen Schwelle *j*₁ durch die folgende Formel: *j*₁= *t* × (1-*β*)/*β*, wobei *β* den Herabstufungskoeffizienten darstellt und t die vorbestimmte gewünschte Dauer darstellt;
Berechnen einer zweiten dynamischen Schwelle *j₂* durch die folgende Formel: *j₂ = (br(×0)* /*bw - 1)* × *gopLen x y,* wobei *br(x0)* die aktuelle Abspiel-Bitrate darstellt, *bw* die vorhergesagte Bandbreite darstellt, *gopLen* die Bildschirmsetlänge darstellt, und y das Nichtsendungsverhältnis des Bildschirmsets darstellt; und
Berechnen einer Summe der ersten dynamischen Schwelle und der zweiten dynamischen Schwelle und Bestimmen der Summe als die dynamische Zwischenspeicher-Schwelle.

9. Verfahren nach einem der Ansprüche 1 bis 5, wobei Bestimmen (S106, S212) eines Abspielgrads, der mindestens einen Grad niedriger als der aktuelle Abspielgrad ist, als Zielabspielgrad als Reaktion auf das Bestimmen, dass sich das Netzwerk in dem Überlastungszustand der zweiten Stufe befindet, umfasst:
Erfassen von Abspielgraden mit Abspiel-Bitraten, die kleiner als die vorhergesagte Bandbreite sind, als Reaktion auf Bestimmen, dass sich das Netzwerk in dem Überlastungszustand der zweiten Stufe befindet; und
Bestimmen eines höchsten Abspielgrads aus den Abspielgraden mit den Abspiel-Bitraten, die kleiner als die vorhergesagte Bandbreite sind, als den Zielabspielgrad.

10. Verfahren nach Anspruch 9, wobei Bestimmen eines Abspielgrads, der mindestens einen Grad niedriger als der aktuelle Abspielgrad ist, als Zielabspielgrad als Reaktion auf das Bestimmen, dass sich das Netzwerk in dem Überlastungszustand der zweiten Stufe befindet, weiter umfasst:
Bestimmen eines Abspielgrads, der einen Grad niedriger als der aktuelle Abspielgrad ist, als den Zielabspielgrad als Reaktion auf Bestimmen des größten Abspielgrads aus den Abspielgraden mit den Abspiel-Bitraten, die kleiner als die vorhergesagte Bandbreite sind, als den aktuellen Abspielgrad.

11. Verfahren zum Abspielen von Videos, **dadurch gekennzeichnet, dass** es umfasst:
Empfangen (S301) eines empfohlenen Zielabspielgrads beim Abspielen von Videodaten mit einem aktuellen Abspielgrad; und
Umschalten (S302) von dem aktuellen Abspielgrad auf den empfohlenen Zielabspielgrad als Reaktion auf einen Auswahlvorgang an dem empfohlenen Zielabspielgrad und Abspielen von empfangenen Videodaten mit dem empfohlenen Zielabspielgrad, wobei der empfohlene Zielabspielgrad gemäß dem Verfahren zur Bestimmung des Videozielabspielgrads nach einem der Ansprüche 1 bis 10 bestimmt wird.

12. Vorrichtung zur Bestimmung eines Videozielabspielgrads, **dadurch gekennzeichnet, dass** sie umfasst:
ein Modul (401) zum Erfassen von Netzwerkzustandsdaten, das konfiguriert ist, um Daten eines Videosendezustands, eine Größe von zwischengespeicherten Daten und eine vorhergesagte Bandbreite zu erfassen, wobei die Daten des Videosendezustands eine Größe von nicht gesendeten Daten und eine Größe von nicht empfangenen Daten umfassen;
ein Modul (402) zum Bestimmen eines Überlastungszustands der ersten Stufe, das konfiguriert ist, um auf der Grundlage der Daten des Videosendezustands und der Größe der zwischengespeicherten Daten zu bestimmen, ob sich ein Netzwerk in einem Überlastungszustand der ersten Stufe befindet, wobei der Überlastungszustand der ersten Stufe eine Bedingung ist, die verwendet wird, um zu bestimmen, ob beim Abspielen eines Videos ein Abspielgrad hochgestuft wird, wobei der Abspielgrad einen Grad einer Videoabspieldefinition darstellt;
ein Modul (403) zum Bestimmen eines Zielabspielgrads für eine Hochstufung, das konfiguriert ist, um einen Zielabspielgrad, der höher als ein aktueller Abspielgrad ist, auf der Grundlage der vorhergesagten Bandbreite, der Größe der zwischengespeicherten Daten und einer vorbestimmten ersten Zwischenspeicher-Schwelle als Reaktion auf das Bestimmen zu bestimmen, dass sich das Netzwerk nicht in dem Überlastungszustand der ersten Stufe befindet;
ein Modul (404) zum Bestimmen eines Überlastungszustands der zweiten Stufe, das konfiguriert ist, um auf der Grundlage der Daten des Videosendezustands und der Größe der zwischengespeicherten Daten zu bestimmen, ob sich das Netzwerk in einem Überlastungszustand der zweiten Stufe befindet, als Reaktion auf das Bestimmen, dass sich das Netzwerk in dem Überlastungszustand der ersten Stufe befindet, wobei ein Überlastungsgrad des Überlastungszustands der zweiten Stufe größer ist als ein Überlastungsgrad des Überlastungszustands der ersten Stufe, wobei der Überlastungsgrad eine Überlastung des Netzwerks beim Verarbeiten von Datenverkehr darstellt;
ein Modul (405) zum Bestimmen eines Zielabspielgrads für eine erste Herabstufung, das konfiguriert ist, um einen Zielabspielgrad aus dem aktuellen Abspielgrad und Abspielgraden, die niedriger als der aktuelle Abspielgrad sind, auf der Grundlage der vorhergesagten Bandbreite, der Größe der zwischengespeicherten Daten und einer vorbestimmten zweiten Zwischenspeicher-Schwelle als Reaktion auf das Bestimmen zu bestimmen, dass sich das Netzwerk in einem Zustand ohne Überlastung der zweiten Stufe befindet; und
ein Modul (406) zum Bestimmen eines Zielabspielgrads für eine zweite Herabstufung, das konfiguriert ist, um einen Abspielgrad, der mindestens einen Grad niedriger als der aktuelle Abspielgrad ist, als Zielabspielgrad als Reaktion auf das Bestimmen zu bestimmen, dass sich das Netzwerk in dem Überlastungszustand der zweiten Stufe befindet.

13. Vorrichtung zum Abspielen von Videos, **dadurch gekennzeichnet, dass** sie umfasst:
ein Modul (501) zum Empfangen eines Zielabspielgrads, das konfiguriert ist, um einen empfohlenen Zielabspielgrad beim Abspielen von Videodaten mit einem aktuellen Abspielgrad zu empfangen; und
ein Modul (502) zum Umschalten eines Abspielgrads, das konfiguriert ist, um von dem aktuellen Abspielgrad auf den empfohlenen Zielabspielgrad als Reaktion auf einen Auswahlvorgang an dem empfohlenen Zielabspielgrad umzuschalten und empfangene Videodaten mit dem empfohlenen Zielabspielgrad abzuspielen, wobei der empfohlene Zielabspielgrad gemäß dem Verfahren zur Bestimmung des Videozielabspielgrads nach einem der Ansprüche 1 bis 10 bestimmt wird.

14. Elektronische Vorrichtung, **dadurch gekennzeichnet, dass** sie umfasst:
einen oder mehrere Prozessoren (601);
einen Speicher, der konfiguriert ist, um ein oder mehrere Programme zu speichern, wobei der eine oder die mehreren Prozessoren (601) beim Laden und Ausführen des einen oder der mehreren Programme veranlasst werden, das Verfahren zur Bestimmung des Videozielabspielgrads, wie es in einem der Ansprüche 1 bis 10 definiert ist, oder das Verfahren zum Abspielen der Videos, wie es in Anspruch 11 definiert ist, durchzuführen.

15. Computerlesbares Speichermedium, das ein Computerprogramm speichert, **dadurch gekennzeichnet, dass** das Computerprogramm beim Laden und Ausführen durch einen Prozessor (601) den Prozessor veranlasst, das Verfahren zur Bestimmung des Videozielabspielgrads, wie es in einem der Ansprüche 1 bis 10 definiert ist, oder das Verfahren zum Abspielen der Videos, wie es in Anspruch 11 definiert ist, durchzuführen.

## Revendications

1. Procédé pour déterminer un niveau de lecture cible d'une vidéo, **caractérisé en ce qu'**il comprend :
l'acquisition (S101, S201) de données d'un état d'envoi de vidéo, d'une taille de données mises en cache et d'une bande passante prédite, dans lequel les données de l'état d'envoi de vidéo comprennent une taille de données non envoyées et une taille de données non reçues ;
la détermination (S102, S202), sur la base des données de l'état d'envoi de vidéo et de la taille des données mises en cache, de savoir si un réseau est dans un état de congestion de premier niveau, dans lequel l'état de congestion de premier niveau est une condition utilisée pour déterminer s'il convient d'augmenter un niveau de lecture lors de la lecture d'une vidéo, le niveau de lecture représentant un niveau d'une définition de lecture vidéo ;
la détermination (S103) d'un niveau de lecture cible supérieur à un niveau de lecture actuel sur la base de la bande passante prédite, de la taille des données mises en cache et d'un premier seuil de mise en cache prédéterminé en réponse à la détermination que le réseau n'est pas dans l'état de congestion de premier niveau ;
la détermination (S104, S206), sur la base des données de l'état d'envoi de vidéo et de la taille des données mises en cache, de savoir si le réseau est dans un état de congestion de deuxième niveau en réponse à la détermination que le réseau est dans l'état de congestion de premier niveau, dans lequel un degré de congestion de l'état de congestion de deuxième niveau est supérieur à un degré de congestion de l'état de congestion de premier niveau, le degré de congestion représentant une congestion du réseau lors du traitement de trafic de données ;
la détermination (S105) d'un niveau de lecture cible à partir du niveau de lecture actuel et de niveaux de lecture inférieurs au niveau de lecture actuel sur la base de la bande passante prédite, de la taille des données mises en cache et d'un deuxième seuil de mise en cache prédéterminé en réponse à la détermination que le réseau est dans un état autre que l'état de congestion de deuxième niveau ; et
la détermination (S106, S212) d'un niveau de lecture inférieur d'au moins un niveau au niveau de lecture actuel en tant qu'un niveau de lecture cible en réponse à la détermination que le réseau est dans l'état de congestion de deuxième niveau.

2. Procédé selon la revendication 1, dans lequel la détermination (S102, S202), sur la base des données de l'état d'envoi de vidéo et de la taille des données mises en cache, de savoir si le réseau est dans l'état de congestion de premier niveau comprend :
le calcul d'une première somme de la taille des données non envoyées et de la taille des données non reçues ;
la détermination de savoir si la taille des données mises en cache est supérieure ou égale à un produit de la première somme et d'un premier coefficient d'accumulation prédéterminé et de savoir si la première somme est inférieure ou égale à un premier seuil d'accumulation prédéterminé ;
la détermination que le réseau est dans l'état de congestion de premier niveau en réponse à la détermination que la taille des données mises en cache est supérieure ou égale au produit de la première somme et du premier coefficient d'accumulation prédéterminé et que la première somme est inférieure ou égale au premier seuil d'accumulation prédéterminé ; et
la détermination que le réseau est dans un état de non-congestion en réponse à la détermination que la taille des données mises en cache est inférieure au produit de la première somme et du premier coefficient d'accumulation prédéterminé ou que la première somme est supérieure au premier seuil d'accumulation prédéterminé.

3. Procédé selon la revendication 1, dans lequel la détermination (S103) du niveau de lecture cible supérieur au niveau de lecture actuel sur la base de la bande passante prédite, de la taille des données mises en cache et du premier seuil de mise en cache prédéterminé comprend :
la détermination (S203) visant à savoir si la taille des données mises en cache est supérieure au premier seuil de mise en cache prédéterminé ;
l'acquisition (S204) de débits binaires de lecture d'au moins un niveau de lecture supérieur au niveau de lecture actuel en réponse à la détermination selon laquelle la taille des données mises en cache est supérieure au premier seuil de mise en cache prédéterminé ;
la détermination (S205) du niveau de lecture cible à partir du au moins un niveau de lecture supérieur au niveau de lecture actuel sur la base des débits binaires de lecture ; et
la réalisation du processus consistant à déterminer, sur la base des données de l'état d'envoi de vidéo et de la taille des données mises en cache, si le réseau est dans l'état de congestion de deuxième niveau en réponse à la détermination selon laquelle la taille des données mises en cache est inférieure ou égale au premier seuil de mise en cache prédéterminé.

4. Procédé selon la revendication 3, dans lequel la détermination (S204) du niveau de lecture cible à partir du au moins un niveau de lecture supérieur au niveau de lecture actuel sur la base des débits binaires de lecture comprend :
pour deux quelconques premier niveau de lecture et deuxième niveau de lecture adjacents qui sont supérieurs au niveau de lecture actuel, l'acquisition d'un coefficient d'augmentation de niveau du premier niveau de lecture par calcul d'un rapport d'un débit binaire de lecture du deuxième niveau de lecture à un débit binaire de lecture du premier niveau de lecture, dans lequel le deuxième niveau de lecture est supérieur au premier niveau de lecture ;
le calcul d'un produit du débit binaire de lecture du premier niveau de lecture et du coefficient d'augmentation de niveau ;
la détermination visant à savoir si la bande passante prédite est supérieure au produit ;
la détermination du premier niveau de lecture en tant qu'un niveau de lecture candidat en réponse à la détermination selon laquelle la bande passante prédite est supérieure au produit ; et
la sélection d'un niveau le plus élevé à partir des niveaux de lecture candidats et la détermination en tant que le niveau de lecture cible ;
pour deux quelconques premier niveau de lecture et deuxième niveau de lecture adjacents qui sont supérieurs au niveau de lecture actuel, l'acquisition du coefficient d'augmentation de niveau du premier niveau de lecture par calcul du rapport du débit binaire de lecture du deuxième niveau de lecture au débit binaire de lecture du premier niveau de lecture comprend :
le calcul, pour deux quelconques premier niveau de lecture et deuxième niveau de lecture adjacents qui sont supérieurs au niveau de lecture actuel, du rapport du débit binaire de lecture du deuxième niveau de lecture au débit binaire de lecture du premier niveau de lecture ;
la détermination d'une valeur plus petite à partir du rapport et d'un coefficient maximal d'augmentation de niveau prédéterminé ; et
la détermination d'une valeur plus grande à partir de la valeur plus petite et d'un coefficient minimal d'augmentation de niveau prédéterminé en tant que coefficient d'augmentation de niveau.

5. Procédé selon la revendication 4, comprenant en outre :
la réalisation du processus consistant à déterminer, sur la base des données de l'état d'envoi de vidéo et de la taille des données mises en cache, si le réseau est dans l'état de congestion de deuxième niveau en réponse à la détermination que la bande passante prédite est inférieure au produit.

6. Procédé selon l'une quelconque des revendications 1 à 5, dans lequel
les données de l'état d'envoi de vidéo comprennent une taille de données non envoyées et une taille de données non reçues, et
la détermination (S104, S206), sur la base des données de l'état d'envoi de vidéo et de la taille des données mises en cache, de savoir si le réseau est dans l'état de congestion de deuxième niveau comprend :
le calcul d'une première somme de la taille des données non envoyées et de la taille des données non reçues ;
la détermination de savoir si un produit de la taille des données mises en cache et d'un deuxième coefficient d'accumulation prédéterminé est inférieur ou égal à la première somme et de savoir si un deuxième seuil d'accumulation prédéterminé est inférieur ou égal à la première somme ;
la détermination que le réseau est dans l'état de congestion de deuxième niveau en réponse à la détermination que le produit de la taille des données mises en cache et du deuxième coefficient d'accumulation prédéterminé est inférieur ou égal à la première somme et que le deuxième seuil d'accumulation prédéterminé est inférieur ou égal à la première somme ; et
la détermination que le réseau est dans l'état autre que l'état de congestion de deuxième niveau en réponse à la détermination que le produit de la taille des données mises en cache et du deuxième coefficient d'accumulation prédéterminé est supérieur à la première somme ou que le deuxième seuil d'accumulation prédéterminé est supérieur à la première somme.

7. Procédé selon l'une quelconque des revendications 1 à 5, dans lequel la détermination (S105) du niveau de lecture cible à partir du niveau de lecture actuel et des niveaux de lecture inférieurs au niveau de lecture actuel sur la base de la bande passante prédite, de la taille des données mises en cache et du deuxième seuil de mise en cache prédéterminé en réponse à la détermination que le réseau est dans l'état autre que l'état de congestion de deuxième niveau comprend :
l'acquisition (S207) de débits binaires de lecture de niveaux de lecture inférieurs au niveau de lecture actuel ;
la détermination (S208) d'au moins un premier niveau de lecture avec des débits binaires de lecture inférieurs à la bande passante prédite en tant que premiers niveaux de lecture candidats ;
pour un deuxième niveau de lecture et le niveau de lecture actuel, la détermination (S209), sur la base de la bande passante prédite, de la taille des données mises en cache et du deuxième seuil de mise en cache prédéterminé, de savoir si le deuxième niveau de lecture et le niveau de lecture actuel sont des niveaux de lecture candidats, dans lequel le deuxième niveau de lecture est un niveau de lecture avec un débit binaire de lecture supérieur à la bande passante prédite et inférieur à un débit binaire de lecture du niveau de lecture actuel ;
la détermination (S210) du deuxième niveau de lecture et du niveau de lecture actuel en tant que deuxièmes niveaux de lecture candidats en réponse à la détermination que le deuxième niveau de lecture et le niveau de lecture actuel sont des niveaux de lecture candidats ; et
la détermination (S211) d'un niveau de lecture avec un niveau le plus élevé à partir des premiers niveaux de lecture candidats et des deuxièmes niveaux de lecture candidats en tant que le niveau de lecture cible.

8. Procédé selon la revendication 7, dans lequel pour le deuxième niveau de lecture et le niveau de lecture actuel, la détermination (S209), sur la base de la bande passante prédite, de la taille des données mises en cache et du deuxième seuil de mise en cache prédéterminé, de savoir si le deuxième niveau de lecture et le niveau de lecture actuel sont les niveaux de lecture candidats comprend :
pour chaque niveau de lecture candidat parmi le deuxième niveau de lecture et le niveau de lecture actuel, l'acquisition d'un débit binaire de lecture actuel du niveau de lecture actuel ;
l'acquisition d'une longueur de groupe d'images et d'une proportion non envoyée de groupe d'images correspondant au niveau de lecture actuel ;
le calcul d'un seuil de mise en cache dynamique sur la base d'un coefficient d'abaissement de niveau prédéterminé, de la longueur de groupe d'images, de la proportion, et d'une durée souhaitée prédéterminée ;
la détermination d'un seuil de mise en cache supérieur à partir du seuil de mise en cache dynamique et du deuxième seuil de mise en cache prédéterminé ;
la détermination de savoir si la bande passante prédite est supérieure ou égale à un produit d'un débit binaire de lecture de chaque niveau de lecture candidat et du coefficient d'abaissement de niveau prédéterminé et de savoir si la taille des données mises en cache est supérieure à une somme du seuil de mise en cache supérieur et d'une taille de données non reçues ;
la détermination de chaque niveau de lecture candidat en tant que le niveau de lecture candidat en réponse à la détermination selon laquelle la bande passante prédite est supérieure ou égale au produit du débit binaire de lecture de chaque niveau de lecture candidat et du coefficient d'abaissement de niveau prédéterminé et que la taille des données mises en cache est supérieure à la somme du seuil de mise en cache supérieur et de la taille des données non reçues ; et
la détermination de chaque niveau de lecture candidat en tant qu'un niveau de lecture non candidat en réponse à la détermination selon laquelle la bande passante prédite est inférieure ou égale au produit du débit binaire de lecture de chaque niveau de lecture candidat et du coefficient d'abaissement de niveau prédéterminé ou que la taille des données mises en cache est inférieure ou égale à la somme du seuil de mise en cache supérieur et de la taille des données non reçues ;
le calcul du seuil de mise en cache dynamique sur la base du coefficient d'abaissement de niveau prédéterminé, de la longueur de groupe d'images, de la proportion, et de la durée souhaitée prédéterminée comprend :
le calcul d'un premier seuil dynamique *j*₁ au moyen de la formule suivante : *j*₁ = *t* × (1-*β*)/*β*, dans lequel *β* représente le coefficient d'abaissement de niveau, et *t* représente la durée souhaitée prédéterminée ;
le calcul d'un deuxième seuil dynamique *j₂* au moyen de la formule suivante : *j₂ = (br(×0)*/*bw - 1)* × *gopLen x y,* dans lequel *br(x0)* représente le débit binaire de lecture actuel, *bw* représente la bande passante prédite, *gopLen* représente la longueur de groupe d'images, et *y* représente la proportion non envoyée de groupe d'images ; et
le calcul d'une somme du premier seuil dynamique et du deuxième seuil dynamique, et la détermination de la somme en tant que le seuil de mise en cache dynamique.

9. Procédé selon l'une quelconque des revendications 1 à 5, dans lequel la détermination (S106, S212) du niveau de lecture inférieur d'au moins un niveau au niveau de lecture actuel en tant que le niveau de lecture cible en réponse à la détermination selon laquelle le réseau est dans l'état de congestion de deuxième niveau comprend :
l'acquisition de niveaux de lecture avec des débits binaires de lecture inférieurs à la bande passante prédite en réponse à la détermination selon laquelle le réseau est dans l'état de congestion de deuxième niveau ; et
la détermination d'un niveau de lecture le plus élevé à partir des niveaux de lecture avec les débits binaires de lecture inférieurs à la bande passante prédite en tant que le niveau de lecture cible.

10. Procédé selon la revendication 9, dans lequel la détermination du niveau de lecture inférieur d'au moins un niveau au niveau de lecture actuel en tant que le niveau de lecture cible en réponse à la détermination que le réseau est dans l'état de congestion de deuxième niveau comprend :
la détermination d'un niveau de lecture inférieur d'un niveau au niveau de lecture actuel en tant que le niveau de lecture cible en réponse à la détermination du niveau de lecture le plus élevé à partir des niveaux de lecture avec les débits binaires de lecture inférieurs à la bande passante prédite en tant que le niveau de lecture actuel.

11. Procédé pour lire des vidéos, **caractérisé en ce qu'**il comprend :
la réception (S301) d'un niveau de lecture cible recommandé lors de la lecture de données vidéo à un niveau de lecture actuel ; et
la commutation (S302) du niveau de lecture actuel au niveau de lecture cible recommandé en réponse à une opération de sélection sur le niveau de lecture cible recommandé, et la lecture de données vidéo reçues au niveau de lecture cible recommandé, dans lequel le niveau de lecture cible recommandé est déterminé selon le procédé pour déterminer le niveau de lecture cible d'une vidéo tel que défini dans l'une quelconque des revendications 1 à 10.

12. Appareil pour déterminer un niveau de lecture cible d'une vidéo, **caractérisé en ce qu'**il comprend :
un module (401) d'acquisition de données d'état de réseau, configuré pour acquérir des données d'un état d'envoi de vidéo, une taille de données mises en cache et une bande passante prédite, dans lequel les données de l'état d'envoi de vidéo comprennent une taille de données non envoyées et une taille de données non reçues ;
un module (402) de détermination d'état de congestion de premier niveau, configuré pour déterminer, sur la base des données de l'état d'envoi de vidéo et de la taille des données mises en cache, si un réseau est dans un état de congestion de premier niveau, dans lequel l'état de congestion de premier niveau est une condition utilisée pour déterminer s'il convient d'augmenter un niveau de lecture lors de la lecture d'une vidéo, le niveau de lecture représentant un niveau d'une définition de lecture vidéo ;
un module (403) de détermination de niveau de lecture cible d'augmentation de niveau, configuré pour déterminer un niveau de lecture cible supérieur à un niveau de lecture actuel sur la base de la bande passante prédite, de la taille des données mises en cache et d'un premier seuil de mise en cache prédéterminé en réponse à la détermination que le réseau n'est pas dans l'état de congestion de premier niveau ;
un module (404) de détermination d'état de congestion de deuxième niveau, configuré pour déterminer, sur la base des données de l'état d'envoi de vidéo et de la taille des données mises en cache, si le réseau est dans un état de congestion de deuxième niveau en réponse à la détermination que le réseau est dans l'état de congestion de premier niveau, dans lequel un degré de congestion de l'état de congestion de deuxième niveau est supérieur à un degré de congestion de l'état de congestion de premier niveau, le degré de congestion représentant une congestion du réseau lors du traitement de trafic de données ;
un premier module (405) de détermination de niveau de lecture cible d'abaissement de niveau, configuré pour déterminer un niveau de lecture cible à partir du niveau de lecture actuel et de niveaux de lecture inférieurs au niveau de lecture actuel sur la base de la bande passante prédite, de la taille des données mises en cache et d'un deuxième seuil de mise en cache prédéterminé en réponse à la détermination que le réseau est dans un état autre que l'état de congestion de deuxième niveau ; et
un deuxième module (406) de détermination de niveau de lecture cible d'abaissement de niveau, configuré pour déterminer un niveau de lecture inférieur d'au moins un niveau au niveau de lecture actuel en tant qu'un niveau de lecture cible en réponse à la détermination que le réseau est dans l'état de congestion de deuxième niveau.

13. Appareil de lecture de vidéos, **caractérisé en ce qu'**il comprend :
un module (501) de réception de niveau de lecture cible, configuré pour recevoir un niveau de lecture cible recommandé lors de la lecture de données vidéo à un niveau de lecture actuel ; et
un module (502) de commutation de niveau de lecture, configuré pour commuter du niveau de lecture actuel au niveau de lecture cible recommandé en réponse à une opération de sélection sur le niveau de lecture cible recommandé, et lire des données vidéo reçues au niveau de lecture cible recommandé, dans lequel le niveau de lecture cible recommandé est déterminé selon le procédé pour déterminer le niveau de lecture cible d'une vidéo tel que défini dans l'une quelconque des revendications 1 à 10.

14. Dispositif électronique, **caractérisé en ce qu'**il comprend :
un ou plusieurs processeurs (601) ;
une mémoire, configurée pour stocker un ou plusieurs programmes, dans lequel le un ou les plusieurs processeurs (601), lors du chargement et de l'exécution du un ou des plusieurs programmes, sont amenés à réaliser le procédé pour déterminer le niveau de lecture cible d'une vidéo tel que défini dans l'une quelconque des revendications 1 à 10 ou le procédé pour lire les vidéos tel que défini dans la revendication 11.

15. Support de stockage lisible par ordinateur, stockant un programme informatique, **caractérisé en ce que** le programme informatique, lorsqu'il est chargé et exécuté par un processeur (601), amène le processeur à réaliser le procédé pour déterminer le niveau de lecture cible d'une vidéo tel que défini dans l'une quelconque des revendications 1 à 10 ou le procédé pour lire les vidéos tel que défini dans la revendication 11.
